Europäisches Patentamt

European Patent Office

Office européen des brevets

(11) Numéro de publication: **0 413 384 A1**

## DEMANDE DE BREVET EUROPEEN

(21) Numéro de dépôt: **90202142.7**

(22) Date de dépôt: **06.08.90**

(51) Int. Cl.⁵: **C01D 1/04**, C01D 1/22, C25B 15/08, C25B 1/46

(30) Priorité: **17.08.89 BE 8900881**

(43) Date de publication de la demande:
**20.02.91 Bulletin 91/08**

(84) Etats contractants désignés:
**AT CH DE DK ES FR GB IT LI NL SE**

(71) Demandeur: **SOLVAY & Cie (Société Anonyme)**
**Rue du Prince Albert, 33**
**B-1050 Bruxelles(BE)**

(72) Inventeur: **Verlaeten, Jean**
**Avenue Circulaire 144A (Bte 10)**
**B-1180 Bruxelles(BE)**

(74) Mandataire: **Anthoine, Paul et al**
**SOLVAY & Cie Département de la Propriété Industrielle 310, rue de Ransbeek**
**B-1120 Bruxelles(BE)**

(54) **Procédé de fabrication d'une lessive d'hydroxyde de sodium.**

(57) Procédé de fabrication de chlore et d'une lessive aqueuse d'hydroxyde de sodium, dans lequel on met en oeuvre une cellule d'électrolyse comprenant une chambre anodique et une chambre cathodique séparées par une membrane perméable sélectivement aux cations, on électrolyse une solution aqueuse de chlorure de sodium dans la chambre anodique et on électrolyse simultanément dans la chambre cathodique, un milieu aqueux contenant de l'hydroxyde de sodium dissous, obtenu en traitant une solution aqueuse de carbonate de sodium avec de la chaux.

EP 0 413 384 A1

# PROCÉDÉ DE FABRICATION D'UNE LESSIVE D'HYDROXYDE DE SODIUM

L'invention a pour objet un procédé pour la fabrication de lessives aqueuses d'hydroxyde de sodium.

Les lessives aqueuses d'hydroxyde de sodium de grande pureté sont généralement fabriquées par voie électrolytique. Les procédés qui sont d'usage industriel sont le procédé d'électrolyse en cellule à cathode de mercure et le procédé d'électrolyse en cellule à membranes sélectivement perméables aux cations.

L'invention concerne plus spécialement un perfectionnement au procédé d'électrolyse en cellule à membranes sélectivement perméables aux cations.

On sait que pour fabriquer des lessives aqueuses d'hydroxyde de sodium dans une cellule d'électrolyse comprenant une chambre anodique et une chambre cathodique séparées par une membrane sélectivement perméable aux cations, on électrolyse simultanément une solution aqueuse de chlorure de sodium dans la chambre anodique et de l'eau dans la chambre cathodique de la cellule. On génère de la sorte du chlore et de l'hydrogène, et on recueille de la chambre cathodique une solution aqueuse d'hydroxyde de sodium, généralement appelée lessive aqueuse d'hydroxyde de sodium (Journal WPCF Vol. 44, No.9, September 1972, S.A. MICHALEK and F.B. LEITZ: "On-site generation of hypochlorite", pages 1697 à 1712 (voir pages 1701 à 1703)). Dans ce procédé connu, la production d'hydroxyde de sodium implique inévitablement la production concomitante de chlore, à raison de 886 g de chlore par kg d'hydroxyde de sodium. Cette relation rigide entre les productions respectives de chlore et d'hydroxyde de sodium constitue un inconvénient majeur du procédé qui, de ce fait, ne présente pas la souplesse nécessaire pour adapter sa production aux fluctuations des marchés respectifs du chlore et de l'hydroxyde de sodium.

On connaît par ailleurs un procédé dans lequel on associe plusieurs cellules d'électrolyse à membrane de telle manière que leurs chambres anodiques respectives soient alimentées en parallèle avec une solution aqueuse de chlorure de sodium, leurs chambres cathodiques étant reliées en série. Dans ce procédé connu, on alimente la chambre cathodique d'une cellule avec de l'eau, les autres cellules étant alimentées chacune avec le catholyte sortant de la cellule qui la précède dans la série (Brevet BE-A-832180). Ce procédé connu améliore certes le rendement global de l'installation d'électrolyse, mais il n'évite pas l'inconvénient précité en relation avec l'impossibilité de dissocier la production d'hydroxyde de sodium de la production concomitante de chlore.

L'invention vise à fournir un procédé qui évite cet inconvénient des procédés connus décrits plus haut, en permettant de réguler la production électrolytique d'hydroxyde de sodium indépendamment de celle du chlore.

L'invention concerne dès lors un procédé de fabrication de chlore et d'une lessive aqueuse d'hydroxyde de sodium, dans lequel on met en oeuvre une cellule d'électrolyse comprenant une chambre anodique et une chambre cathodique séparées par une membrane perméable sélectivement aux cations, on électrolyse une solution aqueuse de chlorure de sodium dans la chambre anodique et on électrolyse simultanément un milieu aqueux contenant de l'hydroxyde de sodium dissous dans la chambre cathodique; selon l'invention, on met en oeuvre de l'hydroxyde de sodium provenant du traitement d'une solution aqueuse de carbonate de sodium avec de la chaux.

Dans le procédé selon l'invention, la membrane perméable selectivement aux cations est une membrane mince, non poreuse, comprenant une matière échangeuse de cations. Des membranes qui conviennent bien sont des membranes cationiques en polymère fluoré, de préférence perfluoré, contenant des groupements fonctionnels cationiques dérivés d'acides sulfoniques, d'acides carboxyliques ou d'acides phosphoniques ou des mélanges de tels groupements fonctionnels.

Dans le procédé selon l'invention, la concentration de la solution aqueuse de chlorure de sodium n'est pas critique. Il est toutefois avantageux d'utiliser une solution la plus concentrée possible, les solutions saturées étant préférées.

Conformément à l'invention, on électrolyse dans la chambre cathodique de la cellule, un milieu aqueux comprenant de l'hydroxyde de sodium obtenu en traitant une solution aqueuse de carbonate de sodium avec de la chaux. Le milieu aqueux est généralement de l'eau. La production d'hydroxyde de sodium par réaction d'une solution aqueuse de carbonate de sodium avec de la chaux est une technique bien connue (K. WINNAKER et L. KÜCHLER "Technologie minérale" traduit par A. ZUNDEL, Editions Eyrolles, 1962, pages 382 à 388). Cette technique de caustification du carbonate de sodium conduit à l'obtention d'une solution aqueuse d'hydroxyde de sodium que l'on utilise pour alimenter la chambre cathodique de la cellule.

Dans le procédé selon l'invention, il est avantageux d'utiliser une solution la plus concentrée possible en carbonate de sodium; les solutions saturées sont préférées. La solution de carbonate de sodium peut être obtenue par tous moyens adéquats. On utilise généralement une solution obtenue par débicarbonatation d'une solution ou d'une suspension aqueuse de bicarbonate de sodium telle que celles que l'on obtient dans le procédé de fabrication de la soude à l'ammoniaque (TE PANG HOU, "Manufacture of soda", Hafner Publishing Company, 1969). La débicarbonatation des solutions ou suspensions aqueuses de bicarbonate de sodium est une opération bien connue en technique, consistant généralement en un chauffage de celles-ci, par exemple au moyen d'un courant de vapeur d'eau.

Dans le cadre de l'invention, la chaux est de l'oxyde de calcium ou de l'hydroxyde de calcium. On préfère utiliser une suspension aqueuse d'hydroxyde de calcium.

Dans une forme de réalisation particulière du procédé selon l'invention, on traite la solution aqueuse de carbonate de sodium avec la chaux, on recueille du milieu réactionnel une solution aqueuse diluée d'hydroxyde de sodium, on soumet ladite solution diluée à une évaporation dans des conditions réglées pour former une solution concentrée contenant, par kg, plus de 186 g d'hydroxyde de sodium, on refroidit ladite solution concentrée pour cristalliser de l'hydroxyde de sodium hydraté dans une eau mère, on recueille l'hydroxyde de sodium hydraté, on le chauffe à une température suffisante pour le fondre et on alimente la chambre cathodique de la cellule avec l'hydroxyde de sodium hydraté fondu. Dans cette forme de réalisation du procédé selon l'invention, l'hydroxyde de sodium hydraté fondu constitue le milieu aqueux précité, que l'on électrolyse dans la chambre cathodique de la cellule.

Dans la forme de réalisation qui vient d'être exposée du procédé selon l'invention, la solution aqueuse diluée d'hydroxyde de sodium que l'on recueille de la réaction du carbonate de sodium avec la chaux contient par exemple, en général, entre 5 et 25% en poids d'hydroxyde de sodium, plus généralement entre 8 et 15%. Elle est généralement contaminée par des matières en solution, provenant des réactifs utilisés dans la réaction de caustification (carbonate de sodium et chaux), notamment du carbonate de sodium, du chlorure de sodium et du sulfate de sodium. Conformément à l'invention, on la concentre en la soumettant à une évaporation réglée pour amener sa teneur en hydroxyde de sodium dissous au-dessus de 186,0 g/kg et de préférence au-dessous de 743 g/kg, qui sont les teneurs correspondant respectivement au mélange eutectique de la glace et de l'hydroxyde de sodium heptahydraté, d'une part, et au mélange eutectique des composés NaOH et NaOH.1H$_2$O, d'autre part. La solution concentrée recueillie de l'évaporation est ensuite refroidie pour cristalliser de l'hydroxyde de sodium hydraté dans une eau mère. La température du refroidissement dépend de la concentration de la solution concentrée d'hydroxyde de sodium recueillie de l'évaporation, et elle peut aisément être déterminée au moyen du diagramme des phases du système NaOH - H$_2$O (P. PASCAL, "Nouveau traité de chimie minérale", Tome II, Premier fascicule, Masson et Cie, éditeurs, 1966, pages 254 à 258). Dans cette forme de réalisation du procédé selon l'invention, on peut mettre en oeuvre la technique décrite dans le document US-A-1733879. Pour recueillir l'hydroxyde de sodium hydraté, on peut faire usage de tout moyen capable de le séparer de l'eau mère, par exemple une filtration, une décantation ou une centrifugation.

Cette forme de réalisation du procédé selon l'invention présente l'avantage d'éviter la présence d'impuretés dans le milieu aqueux susmentionné, utilisé pour alimenter la chambre cathodique de la cellule d'électrolyse.

Dans une variante avantageuse de la forme de réalisation décrite plus haut du procédé selon l'invention, l'évaporation de la solution diluée est réglée de manière que la solution aqueuse concentrée contienne, par kg, entre environ 468 et 321 g d'hydroxyde de sodium, qui sont les teneurs correspondant respectivement au mélange eutectique des composés NaOH.3,5H$_2$O et NaOH.2H$_2$O, d'une part, et à la solution aqueuse saturée en hydroxyde de sodium à la température de cet eutectique, d'autre part. Dans l'exécution de cette variante de réalisation du procédé selon l'invention, il est souhaitable que la solution aqueuse concentrée recueillie de l'évaporation présente une concentration en hydroxyde de sodium notablement différente de 388,3 g/kg, (correspondant au composé défini NaOH.3,5H$_2$O), de manière à faciliter le passage des impuretés dans l'eau mère au cours de la cristallisation par refroidissement. Pour des considérations de nature économique, il est préférable que la solution concentrée recueillie de l'évaporation ait une concentration en hydroxyde de sodium inférieure à 388,3 g/kg.

Dans la variante qui vient d'être décrite du procédé selon l'invention, le refroidissement de la solution concentrée est opéré à une température comprise entre, d'une part, la température de solidification du mélange eutectique des composés NaOH.3,5H$_2$O et NaOH.2H$_2$O (environ 5°C) et, d'autre part, la température de fusion du composé défini NaOH.3,5H$_2$O (environ 16°C).

Le procédé selon l'invention permet une flexibilité dans le fonctionnement des cellules d'électrolyse à membrane, en permettant d'adapter le fonctionnement des cellules au marché de l'hydroxyde de sodium, sans influencer la production du chlore.

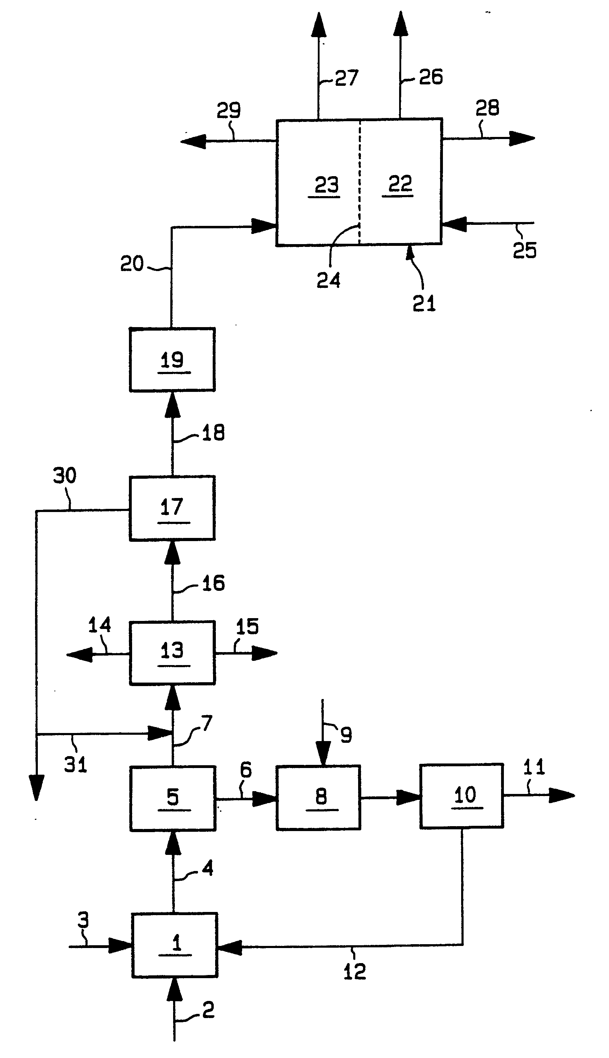

Des particularités et détails de l'invention vont ressortir de la description suivante de la figure unique du dessin annexé, qui représente le schéma d'une installation mettant en oeuvre une forme de réalisation particulière du procédé selon l'invention.

L'installation représentée à la figure comprend une unité de caustification de carbonate de sodium et une cellule d'électrolyse à membrane, désignée dans son ensemble par la notation de référence 21.

Dans l'unité de caustification, on introduit une solution aqueuse de carbonate de sodium 2 et de la chaux vive 3 dans une chambre de réaction 1. On recueille de la chambre de réaction 1 une suspension aqueuse 4 comprenant principalement du carbonate de calcium en suspension dans une solution aqueuse d'hydroxyde de sodium. La suspension 4 est traitée dans une chambre de décantation 5, de laquelle on recueille séparément un précipité de carbonate de calcium 6 et une solution aqueuse diluée d'hydroxyde de sodium 7. Le précipité 6 contient généralement une quantité non négligeable d'hydroxyde de calcium. On l'envoie dans une seconde chambre de réaction 8 qui est par ailleurs alimentée avec une solution aqueuse de carbonate de sodium 9. Après traitement sur un filtre 10 pour en séparer les matières insolubles 11, la solution aqueuse 12 est recyclée dans la chambre de réaction 1. La solution 7 recueillie de la chambre de décantation 5 contient par exemple entre 8 et 15% en poids d'hydroxyde de sodium. Elle est par ailleurs contaminée par diverses impuretés dissoutes, notamment du sulfate de sodium, du carbonate de sodium et du chlorure de sodium. Elle est envoyée dans un évaporateur 13 où on la concentre jusqu'à une teneur en hydroxyde de sodium comprise entre 321 et 388,3 g/kg. L'évaporation a pour résultat d'éliminer de l'eau 14 et de précipiter une partie des impuretés, principalement du sulfate de sodium et du carbonate de sodium, que l'on évacue en 15. La solution aqueuse concentrée 16 que l'on recueille de l'évaporateur 13 est ensuite traitée dans un réfrigérant 17, où on la refroidit à une température comprise entre 5 et 16°C, de manière à cristalliser le composé $NaOH.3,5H_2O$ dans une eau mère. On recueille séparément le composé cristallisé 18 et l'eau mère 30. Le composé cristallisé 18 est essentiellement constitué d'hydroxyde de sodium hydraté de formule $NaOH.3,5H_2O$. On l'envoie dans une chambre de stockage 19, où on le réchauffe à une température supérieure à sa température de fusion (15,9°C), par exemple à la température ambiante, de manière à obtenir une solution aqueuse 20 contenant environ 388,3 g d'hydroxyde de sodium par kg. L'eau mère 30 est une solution aqueuse d'hydroxyde de sodium. Elle est recyclée dans l'évaporateur 13, après en avoir soutiré une purge 31.

La cellule d'électrolyse 21 comprend une chambre anodique 22 et une chambre cathodique 23 séparées par une membrane 24 perméable sélectivement aux cations, par exemple une membrane en polymère perfluoré comprenant des groupes fonctionnel dérivés d'acide carboxylique. La chambre anodique 22 contient une anode (non représentée) raccordée à la borne positive d'une source de courant continu (non représentée); la chambre cathodique 23 contient une cathode (non représentée au dessin) raccordée à la borne négative de la source de courant. Des cellules d'électrolyse de ce type sont bien connues en technique.

Pendant le fonctionnement de la cellule 21, on alimente la chambre anodique 22 avec une solution aqueuse de chlorure de sodium 25; simultanément, on envoie dans la chambre cathodique 23 la solution aqueuse d'hydroxyde de sodium 20 produite dans l'unité de caustification. Dans la chambre anodique 22, l'électrolyse de la solution de chlorure de sodium génère du chlore 26, tandis que dans la chambre cathodique 23, l'électrolyse de la solution aqueuse d'hydroxyde de sodium génère de l'hydrogène 27. On soutire de la chambre anodique une solution aqueuse diluée de chlorure de sodium 28 que l'on peut recycler dans la cellule, après y avoir dissous du chlorure de sodium pour la resaturer. On soutire par ailleurs de la chambre cathodique une lessive aqueuse concentrée d'hydroxyde de sodium 29.

## Revendications

1 - Procédé de fabrication de chlore et d'une lessive aqueuse d'hydroxyde de sodium, dans lequel on met en oeuvre une cellule d'électrolyse comprenant une chambre anodique et une chambre cathodique séparées par une membrane perméable sélectivement aux cations, on électrolyse une solution aqueuse de chlorure de sodium dans la chambre anodique et on électrolyse simultanément un milieu aqueux contenant de l'hydroxyde de sodium dissous dans la chambre cathodique, caractérisé en ce qu'on met en oeuvre de l'hydroxyde de sodium provenant du traitement d'une solution aqueuse de carbonate de sodium avec de la chaux.

2 - Procédé selon la revendication 1, caractérisé en ce qu'à l'issue du traitement de la solution de carbonate de sodium avec la chaux, on recueille une solution diluée d'hydroxyde de sodium, on soumet ladite solution diluée à une évaporation dans des conditions réglées pour former une solution concentrée contenant, par kg, plus de 186,0 g/kg d'hydroxyde de sodium, on refroidit ladite solution concentrée pour cristalliser de l'hydroxyde de sodium hydraté dans une eau mère, on recueille l'hydroxyde de sodium hydraté, on le chauffe à une température suffisante pour le fondre et on électrolyse l'hydroxyde de sodium hydraté fondu dans la chambre cathodique de la cellule.

3 - Procédé selon la revendication 2, caractérisé en ce qu'on règle l'évaporation pour que la solution concentrée contienne, par kg, entre 321 et 468 g d'hydroxyde de sodium, et on refroidit la solution concentrée à une température comprise entre 5 et 16°C.

4 - Procédé selon la revendication 3, caractérisé en ce qu'on règle l'évaporation pour que la solution concentrée présente une teneur pondérale en hydroxyde de sodium inférieure à 388,3 g/kg.

5 - Procédé selon l'une quelconque des revendications 1 à 4, caractérisé en ce qu'on met en oeuvre une solution aqueuse de carbonate de sodium obtenue par débicarbonatation d'une solution saturée de bicarbonate de sodium.

6 - Procédé selon l'une quelconque des revendications 1 à 5, caractérisé en ce qu'on met en oeuvre une cellule d'électrolyse dans laquelle la membrane est une feuille en polymère perfluoré, comprenant des groupes fonctionnels dérivés d'acide carboxylique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A-264595 (SOLVAY ET CIE.) --- | | C01D1/04 C01D1/22 |
| A | FR-A-2281440 (HOECHST) & BE-A-832180 ----- | | C25B15/08 C25B1/46 |

**DOMAINES TECHNIQUES RECHERCHES (Int. Cl.5)**

C01D
C25B

Le présent rapport a été établi pour toutes les revendications

| Lieu de la recherche | Date d'achèvement de la recherche | Examinateur |
|---|---|---|
| LA HAYE | 23 OCTOBRE 1990 | VAN BELLINGEN I. |

EPO FORM 1503 03.82 (P0402)